**Europäisches Patentamt**

**European Patent Office**

**Office européen des brevets**

(19)

(11) Veröffentlichungsnummer : **0 352 555 B1**

(12)

# EUROPÄISCHE PATENTSCHRIFT

(45) Veröffentlichungstag der Patentschrift :
**09.12.92 Patentblatt 92/50**

(51) Int. Cl.$^5$ : **G01N 13/04**

(21) Anmeldenummer : **89112827.4**

(22) Anmeldetag : **13.07.89**

(54) **Verfahren und Einrichtung zur Bestimmung des Gehaltes von in einem Lösungsmittel gelösten Stoffen mittels eines Osmometers.**

(30) Priorität : **25.07.88 DE 3825208**

(43) Veröffentlichungstag der Anmeldung :
**31.01.90 Patentblatt 90/05**

(45) Bekanntmachung des Hinweises auf die
Patenterteilung :
**09.12.92 Patentblatt 92/50**

(84) Benannte Vertragsstaaten :
**AT BE CH DE FR GB IT LI NL SE**

(56) Entgegenhaltungen :
**EP-A- 0 183 072**
**US-A- 3 635 075**

(73) Patentinhaber : **Steudle, Ernst, Prof.Dr.**
**Dorotheenstrasse 3**
**W-8581 Eckersdorf (DE)**

(72) Erfinder : **Steudle,Ernst,Prof.Dr.**
**Dorotheenstrasse 3**
**W-8581 Eckersdorf (DE)**
Erfinder : **Stumpf,Burkhard**
**Weiherleiten 1**
**W-8651 Trebgast (DE)**

(74) Vertreter : **Metzler, Jürgen, Dipl.-Ing.**
**Ketschendorfer Strasse 76**
**W-8630 Coburg (DE)**

EP 0 352 555 B1

Jouve, 18, rue Saint-Denis, 75001 PARIS

## Beschreibung

Die Erfindung bezieht sich auf ein Verfahren zur Bestimmung des Gehaltes von in einem Lösungsmittel gelösten Stoffen mittels eines Osmometers, wie es im Oberbegriff der Ansprüche 1 und 3 angegeben ist, sowie auf Einrichtungen zur Durchführung des Verfahrens.

Ein derartiges Verfahren sowie eine Einrichtung zur Durchführung desselben sind aus der DE-A-35 25 668 sowie den älteren Patentanmeldungen DE-A-37 06 361 und DE-A-37 36 230 bekannt. Nach dem Stand der Technik dient eine künstliche osmotische Zelle, die die Lösung eines nicht permeierenden Osmotikums enthält, als Sensor. In Gegenwart des reinen Lösungsmittels (z.B. Wasser) baut sich in der Zelle ein konstanter hydrostatischer Druck auf, der mit einem elektronischen Druckmeßfühler gemessen wird. In Gegenwart einer Meßlösung in einem Behälter erhält man infolge eines osmotischen Volumenflusses aus der Zelle in den Behälter ein sich zeitlich änderndes Drucksignal, das im allgemeinen einen Zweiphasenlauf aufweist, nämlich eine Phase während eines überwiegenden Wasserflusses und eine weitere Phase während des Flusses der Teilchen. Aus dem Verlauf wird die Konzentration der gelösten Stoffe ermittelt.

Diese Technik läßt sich vor allem auf die Bestimmung der Konzentrationen niedermolekularer Stoffe in Gemischen anwenden, wobei durch die Auswahl der Membran und die Kopplung mit chemischen Reaktionen eine hohe Flexibilität in der Anpassung an bestimmte Meßprobleme erreicht wird. So läßt sich z.B. die Konzentration von Lösungsmitteln in Abwässern der chemischen Industrie oder die Konzentration von Schadstoffen in Lösungen messen; ebenso lassen sich Abbauprodukte in Bioreaktoren in der Biotechnologie direkt bestimmen. Ein weiteres Einsatzgebiet ist die Bestimmung des Alkoholgehaltes während der alkoholischen Gärung und die Messung des Blutalkoholgehaltes. Weiterhin werden derartige Osmometer eingesetzt, um Transportprozesse in der Pflanze und im Boden zu erfassen bzw. zu untersuchen. Es können ebenso Wasserstreßsituationen simuliert werden, wie sie bei Trockenheit oder Frost auftreten. Das gleiche Anwendungsgebiet liegt auch der Erfindung zugrunde. Bezüglich der Verfahren nach dem Stand der Technik und der hierfür geeigneten Osmometer wird auf die zitierten Patentanmeldungen verwiesen. Für die Stoffgehaltsbestimmung können sowohl Lösungen mit nichtpermeierenden als auch solche mit permeierenden Stoffen verwendet werden. In der Osmometerlösung wird ein nichtpermeierender Stoff verwendet, so daß sich infolge der osmotischen Druckdifferenz über der Membran in der osmotischen Zelle ein hydrostatischer Arbeitsdruck aufbaut, der unter Verwendung entsprechender Konzentrationen so eingestellt werden kann, daß sich bei der anschließenden Bestimmung des Stoffes in der Meßlösung gut meßbare Differenzdrücke ergeben. Für die Einstellung wird in die Meßkammer eine Bezugslösung eingebracht, die zweckmäßigerweise ein reines Lösungsmittel, z.B. Wasser, enthält. Nach der Ermittlung des Arbeitsdruckes $P_o$ in der osmotischen Zelle wird die mit der osmotischen Lösung über die Membran in Verbindung gebrachte Bezugslösung durch die die zu bestimmenden Stoffe enthaltene Lösung hinreichend schnell ausgetauscht, worauf sich der Minimaldruck $P_{min}$ einstellt. Da dieser Minimaldruck durch die Konzentration des permeierenden Stoffes in der Lösung bestimmt ist, muß der Austausch der beiden Lösungen sehr schnell verlaufen gegenüber der Halbwertszeit für den Fluß des reinen Lösungsmittels durch die Membran, die im Bereich von Sekunden liegen kann.

Alternative Verfahren hierzu sind ebenfalls im Stand der Technik gemäß der erstgenannten veröffentlichten Schrift angegeben. Anhand des Druckkurvenverlaufes lassen sich dabei die Konzentrationen der permeierenden und nichtpermeierenden Stoffe in der Lösung ermitteln.

Um sehr geringe Mengen der Konzentration bestimmter Stoffe erfassen zu können, ist in der älteren Patentanmeldung P 37 06 361 eine Differenzdruckmethode angegeben, nach der eine Bezugslösung so gewählt wird, daß sie die gleichen Stoffe enthält, die auch in der zu untersuchenden Lösung enthalten sind, und die Konzentrationsdifferenz zwischen der Bezugs- und Osmometerlösung nicht mehr als 70 m Os mol beträgt. Die Methode läßt sich durch die Kopplung mit einer chemischen Reaktion in der Zelle verfeinern, z. B. einer Enzymreaktion, wodurch eine besonders hohe Selektivität des Meßsystems erreicht wird. Das entsprechende Verfahren und die Einrichtung zur Durchführung desselben sind in der leztgenannten älteren Patentanmeldung DE-A-37 36 230 angegeben.

Aus der US-PS 36 35 075 ist ein sogenanntes Hepp-Osmometer bekannt, bei dem die Verformung einer Druckwandlermembran bzw. eines Meniscus als Folge eines Wasserflusses erfaßt wird. Um Störeffekte durch hydrostatische Druckunterschiede zu beiden Seiten der Membran auszugleichen, ist ein Bypass vorgesehen, so daß nur der osmotische Druck erfaßt wird. Das angewendete Meßprinzip beruht auf einer Änderung des Druckes bzw. des Volumens einer osmotischen Zelle, d.h., es finden Wasserflüsse und Volumenänderungen in der osmotischen Zelle statt.

Aus der EP-A-183 072 ist darüber hinaus bekannt, sowohl im Hinblick auf eine generelle Kontrolle des Meßkopfes auf Starrheit der osmotischen Zelle aber auch zur Ermittlung des Elastizitätsmoduls der osmotischen Zelle eine Einrichtung zur kontrollierten Volumenänderung der osmotischen Zelle vorzusehen. Mit einer solcher Einrichtung kann beispielsweise das Volumen der osmotischen Zelle durch Einschieben und Herausfah-

EP 0 352 555 B1

ren eines Regelstabes innerhalb gewisser Grenzen sehr genau variiert und die Volumenänderung mittels eines Mikrometers gemessen werden. Bei geschlossener osmotischer Zelle führt dies zu Druckänderungen, die mittels der Druckeinrichtung erfasst werden. Bei bekanntem Volumen der osmotischen Zelle kann somit die Elastizität der osmotischen Zelle bestimmt werden.

Es hat sich herausgestellt, daß die bisher verwendeten Verfahren und Geräte hinsichtlich der Meßzeit und der Trennung permeierender Komponenten Mängel aufweisen. Insbesondere lassen sich Stoffe, deren Permeabilität nur gering verschieden ist von der des Lösungsmittels, nur schwer bestimmen. Des weiteren weisen die bekannten Verfahren den Nachteil auf, daß die Meßzeit zur Ermittlung der Konzentration zu lang sind (25 Minuten im günstigsten Fall und über Stunden im ungünstigsten Fall bei bestimmten Lösungen).

Der Erfindung liegt ausgehend von dem beschriebenen Stand der Technik die Aufgabe zugrunde, ein alternatives Meßverfahren und geeignete Einrichtungen zur Durchführung zu entwickeln, mit welchem die Meßzeiten wesentlich verkürzt werden können.

Die Aufgabe wird durch das in den Ansprüchen 1 und 3 angegebene Verfahren bzw. durch die im Anspruch 9 und 11 angegebene Einrichtung gelöst.

Während nach Anspruch 1 zwei Druckmeßeinrichtungen vorzusehen sind, ist eine Bestimmung der in dem Lösungsmittel enthaltenen Stoffe durch Auswertung des Druckverlaufes im Osmometer nach Anspruch 3 auch mit nur einer einzigen Meßeinrichtung möglich. Selbstverständlich kann auch nach diesem Verfahren eine zweite Druckmeßeinrichtung in der zweiten Zelle mit vorgesehen sein. Vorteilhaft ist es, großflächige und damit empfindlichere Drucksensoren einzusetzen. Dies gilt sowohl bei Anordnung derselben in der ersten oder zweiten Kammer, wenn das Volumen der Kammer ausreichend ist. Diese Drucksensoren sind Bestandteil eines Druckwandlers, z. B. eines elektronischen Druckwandlers, der den gemessenen Druck in auswertbare elektrische Signale umsetzt.

Mit einem Verfahren nach Anspruch 2 kann die Meßzeit wesentlich verkürzt werden, ebenso können die Gehalte von Stoffen in Meßlösungen ermittelt werden, deren Permeabilität nur wenig verschieden ist von der der Lösungsmittel. Nach den angegebenen Verfahrensschritten werden mittels einer Kompensationsmethode die beim Austausch der Bezugslösung im Meßraum durch die Meßlösung auftretenden Volumenflüssen ($J_v$) vermieden bzw. unterdrückt, indem der Druck im Testraum derart variiert bzw. erhöht wird, wobei ein konstanter Druck in der osmotischen Zelle $J_v = 0$ anzeigt. Auf diese Weise wird gegenüber dem Stand der Technik das Meßprinzip und der Charakter der Meßkurven verändert, so daß der Druckverlauf in der Meßkammer nicht mehr Volumenflüsse, sondern direkt die Teilchenflüsse widerspiegelt. Die von der Meßeinrichtung in der Meßkammer ermittelten differentiellen Werte werden während der Meßzeit erfaßt und können kurvenmäßig dargestellt werden. Eine Auswertung der Meßkurve wird dabei wesentlich durch das Kompensationsverfahren vereinfacht, da, bezogen auf den eingestellten Arbeitsdruck, ein sprunghafter konstanter Anstieg bei der Messung der Gehalte des Stoffes in einer Lösung, die nur nichtpermeierende Stoffe enthält, gegeben ist. Nimmt nach der Ermittlung des Maximums der Druck hingegen exponentiell ab, so zeigt dies an, daß permeierende Stoffe vorhanden sind, deren Gehalte sich anhand des Kurvenverlaufes ermitteln lassen. Sind verschiedene permeierende Stoffe in der Meßlösung vorhanden und ist eine entsprechende Membran vorgesehen, die die Stoffe hindurchläßt, so läßt sich aus dem differentiellen Kurvenverlauf bzw. aus den Anfangsneigungen anhand der ermittelten, den einzelnen Segmenten zugeordneten Exponentialfunktionen nicht nur der Gehalt der permeierenden Stoffe, sondern auch deren Zusammensetzung und unter Zuhilfenahme von Vergleichswerten auch deren Art bestimmen.

Dies erfolgt zweckmäßigerweise mittels eines Computers nach eingeschriebenem Programm. Die Konzentrationen permeierender und nichtpermeierender Stoffe lassen sich unmittelbar aus den Maximalausschlägen der Druckmeßeinrichtung nach Anspruch 2 ermitteln.

Bei dem Verfahren nach Anspruch 3 wird ein Regelstab bzw. ein Druckkolben in der ersten Kammer mit Hilfe eines Antriebes z. B. per Hand manuell, mittels einer Mikrometerschraube oder mittels eines Motors, über eine Verschiebestange oder durch einen hydraulischen Antrieb, bei dem Druckmittel wechselseitig oder einseitig gegen den Kolben strömend in den Druckraum eingelassen wird, bewegt, so daß der hydrostatische Druck in der Zelle erhöht oder vermindert wird. Bei der Messung wird der Druck mit Hilfe des Stabes so manipuliert, daß der Volumen (Wasser)-fluß über die Membran verschwindet. Die sich ergebende stationäre Druckänderung ist ein Maß für die Konzentrationsänderung eines nichtpermeierenden oder eines permeierenden Stoffes in einer Lösung, das nach vorheriger Äquilibrierung der Zelle mit einer Bezugslösung zugegeben wird und die Druckänderung bestimmt.

Der hydrostatische Druck in der ersten Kammer, in der sich die osmotische Zelle befindet, wird bei einer Änderung der Konzentration mit Hilfe des Regelstabes so eingeregelt, daß der Druckverlauf dP/dt bzw. der Volumenfluß des Wasser dV/dt = 0 werden. Z.B. wird bei einer Konzentrationserhöhung gegenüber einer Bezugslösung bekannter Konzentration der Innendruck soweit durch Herausziehen des Regelstabes abgesenkt, daß die genannte Bedingung wieder erfüllt ist. Bei einer Minderung wird der Druck emtsprechend erhöht, d.h.,

EP 0 352 555 B1

der Regelstab bzw. der den Druckraum verkleinernde Kolben wird in die Kammer, in der die osmotische Zelle sich befindet, hineingeschoben. Es handelt sich also um eine Variante der bereits beschriebenen Methode nach dem Verfahren gemäß Anspruch 1, bei der aber nur eine Druckmeßeinrichtung erforderlich ist.

Dieses Verfahren läßt sich auch, wie das Verfahren nach Anspruch 1, bei permeierenden Stoffen anwenden. Die Meßkurven sind dann biphasisch, d.h., bei einer Konzentrationserhöhung wird nach dem Erreichen eines Minimums eine Teilchenphase beobachtet, deren Länge gegenüber dem Verfahren nach Anspruch 1 allerdings nicht beeinflußt werden kann. Dieses Verfahren ist nur anwendbar, so lange die Halbwertzeit für den Austausch der gelösten Stoffe deutlich größer ist als für das Lösungsmittel (z. B. Wasser).

Durch Anwendung des beschriebenen Verfahrens nach Anspruch 3 wird gegenüber dem Verfahren nach Anspruch 1 die Meßzeit nochmals verkürzt (z. B. von wenigen Minuten auf 20 s). Auch ist es nicht erforderlich, unbedingt eine osmotische Zelle vorzusehen, die inkompressibel ist. Es empfiehlt sich jedoch, eine Zelle mit hoher Starrheit (hoher elastischer Koeffizient) und mit möglichst hohem Oberflächen/Volumenverhältnis einzusetzen. Weiterhin weist dieses Verfahren den Vorteil auf, daß Konzentrationsänderungen in der Zelle durch die Kompensation weitgehend vermieden werden.

Weitere vorteilhafte Verfahrensschritte sind in den Ansprüchen 2, 4 bis 8 angegeben. Einrichtungen zur Durchführung des Verfahrens, die sich als besonders geeignet erwiesen haben, sowie vorteilhafte Weiterbildungen dieser Einrichtungen sind in den Ansprüchen 9 bis 16 angegeben.

Die Druckkompensation kann auf mannigfaltige Art und Weise erfolgen. Eine Einrichtung, die dies ermöglicht und zur Durchführung des Verfahrens nach Anspruch 1 und 2 geeignet ist, ist z. B. im Anspruch 9 angegeben. Danach kann der Druck unmittelbar durch Variation bzw. Erhöhung des Pumpendruckes und danach erfolgender Sperrung der Zulaufventile bei gesperrtem Ablaufventil eingestellt werden. Er kann aber auch angepaßt werden durch Änderung des Volumens der Meßkammer. Als Regelgröße wird dabei der Druck in der osmotischen Zelle gemessen und entsprechend dem Druckabfall durch den Volumenfluß des Lösungsmittels oder der permeierenden Stoffe der bestimmten osmotischen Lösung erhöht, wodurch ein Volumenfluß des Lösungsmittels in der Osmoselösung und damit ein Druckabfall in der osmotischen Zelle vermieden wird. Dieser Prozeß dauert in der Regel nur wenige Minuten, so daß schon in einer Meßzeit von 10 bis 15 Minuten der sich einstellende Druckverlauf durch den Volumenfluß der Stoffe in der Meßkammer einen Aufschluß auf den Gehalt der permeierenden und nichtpermeierenden Stoffe ermöglicht. Darüber hinaus können Konzentrationen aus den Maximalwerten des Druckes in der Meßkammer nach vorheriger Eichung-bestimmt werden. Die Meßzeiten betragen dann nur 10 - 20 Sekunden. Die Arbeitstemperatur liegt bei 21,5° C.

Das Verfahren nach Anspruch 1 und 2 läßt aber nur dann eine qualifizierte Beurteilung der ermittelten Druckwerte zu, wenn eine Druckänderung in den beiden Kammern durch die mechanische Ausbildung der Membran nicht beeinträchtigt wird. Die Membran muß so starr ausgebildet sein, daß sie bei gegebenen Druckunterschieden zwischen den beiden Kammern sich nicht verformt oder durchbiegt. Es empfiehlt sich deshalb, die Membran entsprechend den Angaben in Anspruch 9 mit einem Stützgitter zu unterlegen oder nach Anspruch 14 einen nicht deformierbaren und inkompressiblen porösen Körper aus Glassintermaterial, Keramik oder Kunststoff zu verwenden und unter Anwendung des vorteilhaften Verfahrensschrittes nach Anspruch 5 einen Unterdruck oder negativen Druck in der osmotischen Zelle zu erzeugen, damit auch eine nicht starr ausgebildete Membran unter Druck auf der Oberfläche der osmotischen Zelle aufliegt. Die osmotische Zelle kann auch mit einer Lösung bereits getränkt sein oder aus einem Lösungsfilm bestehen. Grundsätzlich läßt sich das Verfahren zur Bestimmung der Stoffgehalte permeierender und nichtpermeierender Stoffe in einer Lösung der verschiedensten Zusammensetzung einsetzen. Zur Verfeinerung des Verfahrens kann dabei auch das Differenzverfahren nach der älteren Patentanmeldung P 37 06 631 unterstützend mit eingesetzt werden. Die Auswertung des gemessenen Druckkurvenverlaufes in der Meßkammer erfolgt zweckmäßigerweise mittels eines Computers, an dessen Meßwerterfassungseingänge entsprechend den Angaben in Anspruch 15 die digitalisierten oder analogen elektrischen Meßwerte von den Druckwandlern anliegen und in verarbeitbare Größen umgerechnet werden. Nach einem eingeschriebenen Programm erfolgt die Auswertung der Meßkurven, wobei nach den differentiellen Exponentialverläufen bei entsprechend vorhandenen Vergleichswerten unmittelbar auf den Gehalt einzelner Stoffe rückgeschlossen werden kann, sofern eine Membrananordnung gewählt ist, die für verschiedene Stoffe durchlässig ist.

Eine weitere Einrichtung zur Durchführung des Verfahrens nach den Ansprüchen 3 bis 8 ist in dem Anspruch 11 ff. angegeben, bei der der Druck in der ersten Kammer, in der die osmotische Zelle sich befindet, variiert wird durch Volumenänderung. Dies kann durch einen Kolben erfolgen, der das Volumen der osmotischen Zelle unmittelbar verändert oder der in einem Zylinder oder einem Kanal gelagert ist, der in die Kammer einmündet. Der Kolben kann z. B. ein Regelstab sein, der einen Durchmesser von 0,5 mm aufweist. Dieser Regelstab ist innerhalb des Zylinders verschiebbar gelagert, so daß er hin und her bewegt werden kann und somit derart nachgeregelt werden kann, daß in Abhängigkeit des erfaßten momentanen Druckwertes durch die Druckmeßeinrichtung eine Nachregelung solange erfolgt, bis der Volumenfluß durch die Membran (d.h.

dP/dt) den Wert 0 annimmt. Der Regelstab bzw. der Zylinder können dabei selbstverständlich auf mannigfaltige Art und Weise betätigt werden. Mit dieser Einrichtung läßt sich die Meßzeit gegenüber einer Einrichtung nach dem Anspruch 9 bzw. 10 nochmals verkürzen, z. B auf 20 s.

Die Erfindung wird nachfolgend anhand der in den Figuren dargestellten Ausführungsbeispiele und des Kurvenverlaufes näher erläutert:

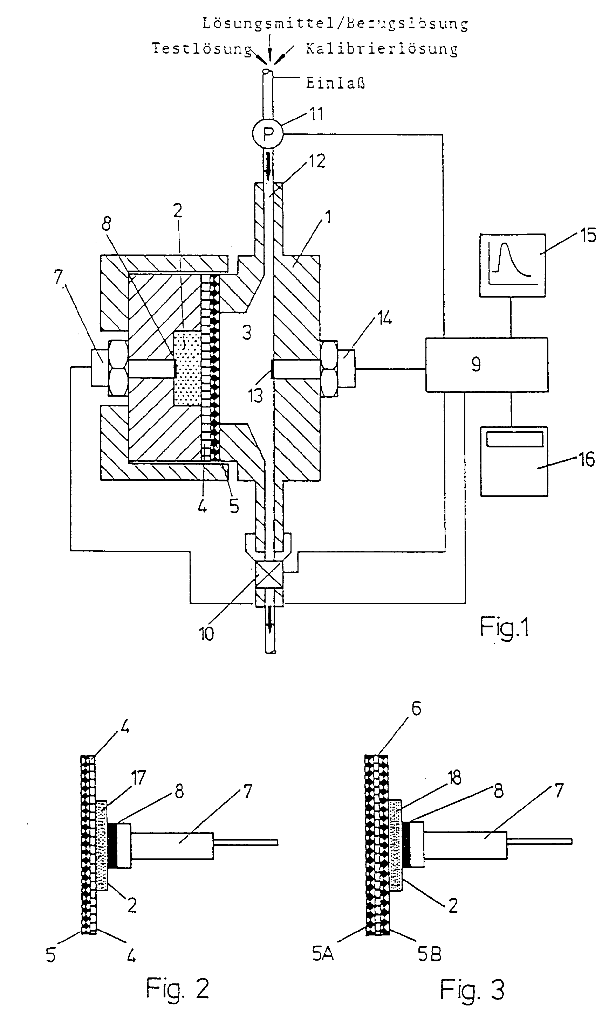

In Figur 1 ist schematisch im Schnitt eine Meßeinrichtung zur Durchführung des Verfahrens nach der Erfindung dargestellt, die im wesentlichen aus einem geschlossenen, starre Wandungen aufweisenden Gehäuse 1, mit dicken, druckbelastbaren ineinandergreifenden Gehäusewandteilen, einer darin angeordneten Kammer 2 zur Aufnahme einer osmotischen Zelle 17, 18 (Fig. 2 und Fig.3 ), die die Kammer 2 voll ausfüllt, und einer Kammer 3, die die Meßkammer bildet, besteht.

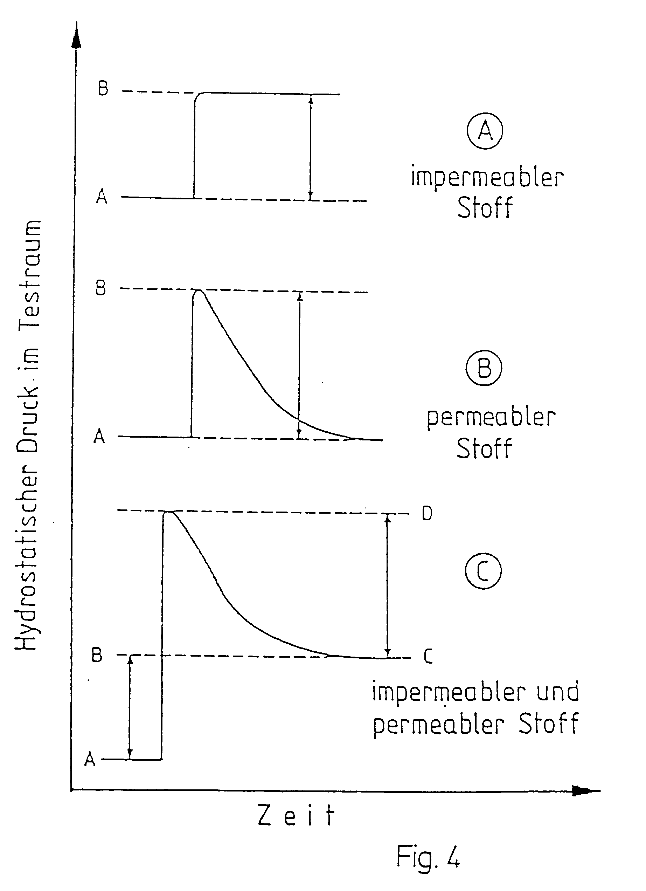

Beide Kammern sind durch eine Membran 4 voneinander getrennt, die, wie aus den Figuren 2 und 3 ersichtlich ist, mit einem Stützgitter 5 unterlegt ist. An diese Membran schließt sich unmittelbar die osmotische Zelle (17, 18) an, die z.B. aus einem dünnen Keramik-Chip (Fig. 2) bestehen kann, vorausgesetzt, es wird im letzteren Fall dafür Sorge getragen, daß das Stützgitter 5 eine Auslenkung der Membran in der einen oder anderen Richtung vermeidet. Zu diesem Zweck ist in Fig. 3 ein doppeltes Stützgitter 5A und 5B mit einer mittigen Membran 6 vorgesehen. Auf die osmotische Zelle greift ein in der Gehäusewand befestigter Druckwandler 7 auf, dessen Sensor 8 den osmotischen Druck in der osmotischen Zelle erfaßt. In dem Druckwandler 7 wird der gemessene Druck elektronisch in elektrische Signale umgesetzt, vorzugsweise digital codierte Signale, die an den einen Meßerfassungseingang eines zentralen Rechners 9 geleitet werden. Dieser zentrale Rechner 9 dient zugleich als zentrale Steuereinheit zur Ansteuerung eines Reduzierventils 10 in der Ausgangsleitung der Meßkammer 3 und für die Pumpensteuerung der Pumpe 11 in der Zuleitung. Entsprechende Steuerausgänge sind an der Zentraleinheit 9 vorgesehen. Die Pumpe 11 ist in der Zuleitung 12 angeordnet. Unmittelbar vor dem Einlaß ist ein nicht dargestelltes Absperrventil vorgesehen. Dieses kann ebenfalls elektrisch oder pneumatisch gesteuert in Abhängigkeit einer entsprechenden Steuerinformation von dem Zentralrechner 9 geöffnet oder geschlossen werden. Das Osmometer nach der Erfindung kann auch im Durchflußverfahren eingesetzt werden, wenn über ein Reduzierventil der Druck einstellbar ist. Er kann z. B. in einem Nebenzweig zu einem Hauptleitungsrohr, durch welches permanent Meßflüssigkeit fließt, eingesetzt werden. Dann dienen die Ventile nur für den Eich- und Bezugsgrößenprozeß. In die Meßkammer 3 greift ferner ein Drucksensor 13 eines weiteren Druckwandlers 14 ein, der den zweckmäßigerweise elektronisch digital umgesetzten Meßwerte an den weiteren Erfassungseingang der zentralen Steuereinheit 9 abgibt. Im Testraum können das reine Lösungsmittel, die zu untersuchende Lösung bzw. Kalibrierlösungen umgepumpt werden. Der jeweils gegebene hydrostatische Druck in der Meßkammer 3 wird von dem Drucksensor 13 registriert und durch den Druckwandler in von der zentralen Steuereinheit erfaßbare Daten umgesetzt. Die osmotische Zelle kann dabei entweder über die zweite Kammer 3 oder über nicht dargestellte Zuleitungen mit einem nichtpermeierenden Stoff beschickt werden, wobei sich in Gegenwart eines reinen Lösungsmittels in der angrenzenden Meßkammer 3 in der osmotischen Zelle ein konstanter hydrostatischer Arbeitsdruck P bei Atmosphärendruck aufbaut. Nach dem Wechsel auf die zu untersuchende Lösung, bzw. eine Kalibrierlösung, findet ein Wasser (Volumen)-fluß aus der osmotischen Zelle statt, was zu einem Druckverlust in dieser führt. Der Wasserfluß wird durch Gegensteuerung, durch Druckerhöhung im Meßraum 3, kompensiert, zu welchem Zweck ein noch nicht verschlossenes Reduzierventil in eine Stellung gebracht wird, die einen Druckanstieg ermöglicht. Die Druckerhöhung kann selbstverständlich auch durch Veränderung des Volumens der Meßkammer 3 erzielt werden, wozu entsprechende bewegliche Stellglieder in den Wandungen vorzusehen sind, die über Antriebe bewegbar sind, z.B. ein mittels einer Mikrometerschraube verstellbarer Kolben. Besteht die Meßlösung nur aus einem nichtpermeierenden Stoff, so wird dabei eine Druckstufe registriert, d.h., der eingestellte Maximaldruck, der zur Kompensation der Kraft des Volumenflusses dient, ist unmittelbar eine Größe für den Gehalt des nichtpermeierenden Stoffes in der zu messenden Lösung. Der Druckverlauf ist in Fig. 4 A eingezeichnet. Über den Druckwandler 14 mit dem Sensor 13 wird dabei in der Druckkammer unter Vernachlässigung der Übergangszeit ein Druckanstieg auf ein neues konstantes Niveau (von A nach B) erzeugt, dessen Höhe der Konzentration des nicht permeierenden Stoffes proportional ist.

Weist die Meßlösung einen oder mehrere permeierende Stoffe auf, so erhält man nach der Kompensation ebenfalls einen proportionalen Druckanstieg, der allerdings von einem exponentiellen Druckabfall auf das alte Niveau gefolgt ist, da der Stoff in die osmotische Zelle permeiert, wie aus Abbildung B in Fig. 4 ersichtlich ist. Die Geschwindigkeitskonstante des Druckabfalls ist bei gegebener Membran und gegebenem Lösungsmittel eine Stoffkonstante. Aus den differentiellen, in unterschiedlichen Neigungswinkeln verlaufenden Kurvenabschnitten können die exponentiellen Verläufe der einzelnen permeablen Stoffe errechnet werden, wenn diese bei entsprechender Membrananordnung mit ausgewertet werden. Bei einem permeierenden Stoff kann auch die Anfangsneigung als Maß für die Konzentration herangezogen werden. Aus den differentiellen Werten lassen sich in der zentralen Prozessoreinheit die Exponentialfunktionen ermitteln, die zu einem bestimmten Stoff gehören, so daß auch eine Stoffanalyse unter gleichzeitiger Ermittlung des Gehaltes möglich ist, wenn hierfür in der zentralen Prozessoreinheit oder einem weiteren angeschlossenen Rechner Vergleichswerte zur Verfügung stehen.

Liegt hingegen ein Gemisch aus einem permeierenden und einem nichtpermeierenden Stoff vor, so ergibt sich eine Überlagerung der Prozesse A und B, die durch den Druckwandler 14 entsprechend registriert werden, gemäß dem Kurvenverlauf C in Fig. 4, wobei die Strecken A/B und C/D ein Maß für die Konzentration des impermeablen und des permeablen Stoffes sind, die entweder nach Rechnung oder Eichung mit Lösungen bekannter Konzentrationen ermittelt werden können. Mehrere permeierende Stoffe lassen sich nebeneinander bestimmen, wenn ihre Geschwindigkeitskonstanten genügend differieren.

Anstelle des reinen Lösungsmittels (Wasser) in der hier beschriebenen praktischen Anwendung kann auch eine Bezugslösung verwendet werden mit Gehalten und Angaben entsprechend der älteren Patentanmeldung DE-A-37 06 361, um z.B. kleinste Konzentrationsdifferenzen messen zu können.

Die Osmometerlösung kann selbstverständlich auch direkt in die osmotische Zelle eingegeben werden. Die Ausbildung der beiden Kammern in einem geschlossenen System ist auf verschiedene Art und Weise möglich und entsprechend dem Einsatzbereich anzupassen. Die Anzeige des Kurvenverlaufes ist über eine analoge Sichtanzeige 15 möglich, die an die zentrale Steuereinheit 9 anschließbar ist. Ebenso können, wenn es sich um eine computergestützte Auswertung handelt, auf einem Drucker 16 die entsprechenden Stoffgehalte der zu messenden Lösung ausgedruckt werden.

Bei der Dimensionierung der Meßkammer sind nach oben keine Grenzen gesetzt, solange gewährleistet ist, daß innerhalb der Meßkammer kein Druckgradient auftritt, der dazu führt, daß am Druckwandler ein anderer Druck anliegt als an der Membran. Die osmotische Zelle sollte zur Erhöhung der Meßempfindlichkeit eine große effektive Oberfläche bei kleinem Volumen (Schichtdicke: z. B. 0,2 mm) und eine hohe hydraulische Leitfähigkeit aufweisen.

Die nachfolgenden Ausführungsbeispiele veranschaulichen die Einsatzbereiche der Erfindung und das entsprechende meßtechnische Verfahren:

Ausführungsbeispiele

a) Bestimmung der Konzentration eines permeierenden Stoffes in einem Lösungsmittel aus der maximalen Druckänderung

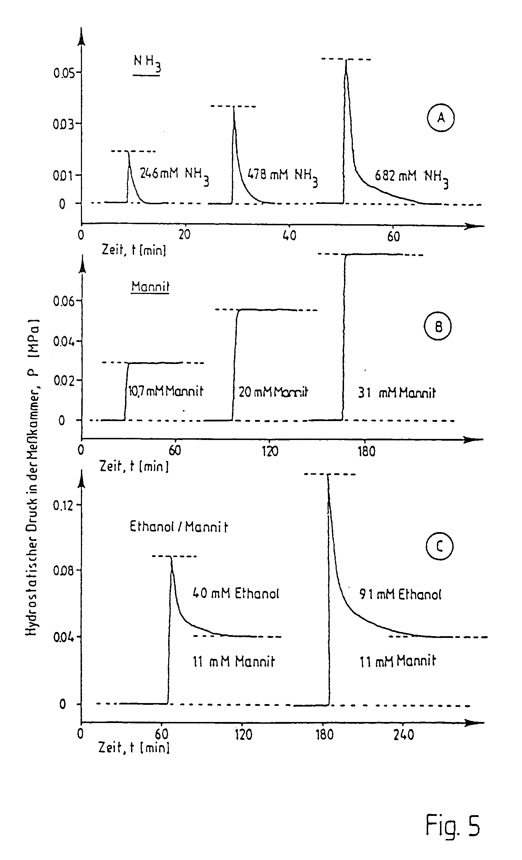

Permeierender Stoff: Ammoniak ($NH_3$); Lösungsmittel: Wasser. Die Zugabe von verschiedenen Konzentrationen von $NH_3$ zur Bezugslösung (Wasser) ergibt monophasische Relaxationen, wobei die maximale Druckänderung ($\Delta P_{max}$) der Konzentration proportional ist (Fig. 5A) und 6A). Bei der Eichung wurden die Werte:

| $C_{NH_3}$ (mM) | 246 | 478 | 682 |
|---|---|---|---|
| $\Delta P_{max}$ (MPa) | 0,0184 | 0,0368 | 0,0554 |

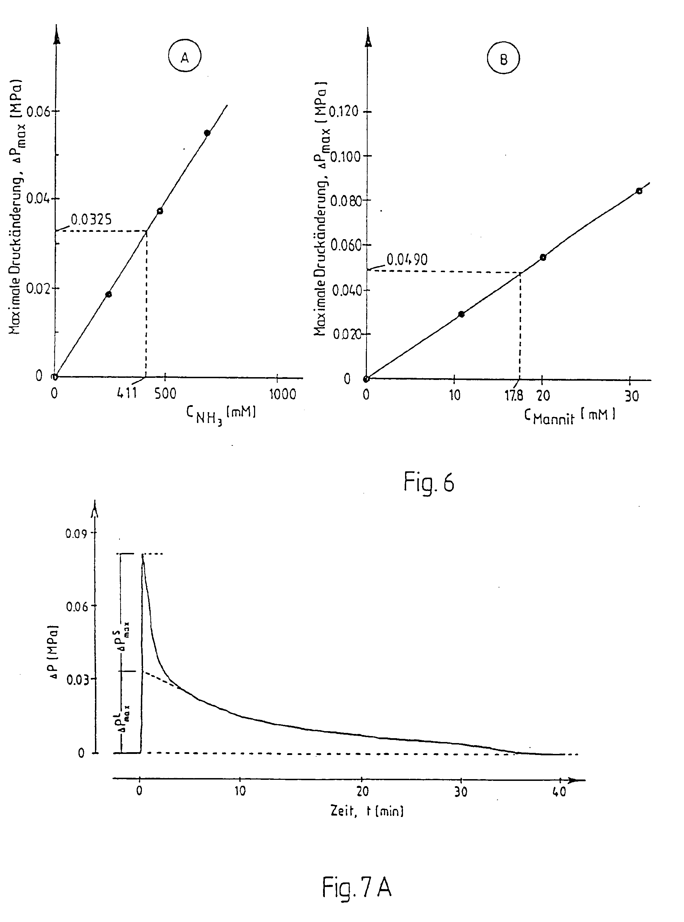

ermittelt. Die Bestimmung der Konzentration einer wäßrigen $NH_3$-Lösung ergab ein $\Delta P_{max}$ = 0,0325 MPa, was anhand der Eichgeraden einer Konzentration $C_{NH3}$ = 411 mM entspricht (Fig. 6A).

b) Bestimmung der Konzentration eines nichtpermeierenden Stoffes in einem Lösungsmittel

Nichtpermeierender Stoff: Mannit; Lösungsmittel: Wasser. Die Zugabe von verschiedenen Konzentrationen von Mannit zur Bezugslösung (Wasser) ergab Druckstufen mit konstantem $\Delta P_{max}$ in der Meßkammer, wobei $\Delta P_{max}$ nach ca. 40 s erreicht wurde (Fig. 5B). Bei der Eichung wurden gemessen:

| $C_{Mannit}$ (mM) | 10,7 | 20 | 31 |
|---|---|---|---|
| $\Delta P_{max}$ (MPa) | 0,0298 | 0,0556 | 0,0850 |

Die Bestimmung der Konzentration einer wäßrigen Lösung eines nichtpermeierenden Stoffes ergab ein $\Delta P_{max}$ = 0,0490 MPa, was einer Konzentration $C_{Imp}$ = 17,8 mM entspricht (Fig. 6B).

c) Bestimmung der Konzentration eines permeierenden und eines nichtpermeierenden Stoffes nebeneinander

Permeierender Stoff: Ethanol; nichtpermeierender Stoff: Mannit. Die Zugabe von Gemischen aus Ethanol und Mannit ergab monophasische Druckrelaxationen mit konstanten Druckstufen (Fig. 5C), wobei die Höhen der Druckstufen bzw. $\Delta P_{max}$ wiederum der Konzentration proportional waren.

d) Lösung mit zwei permeierenden Stoffen

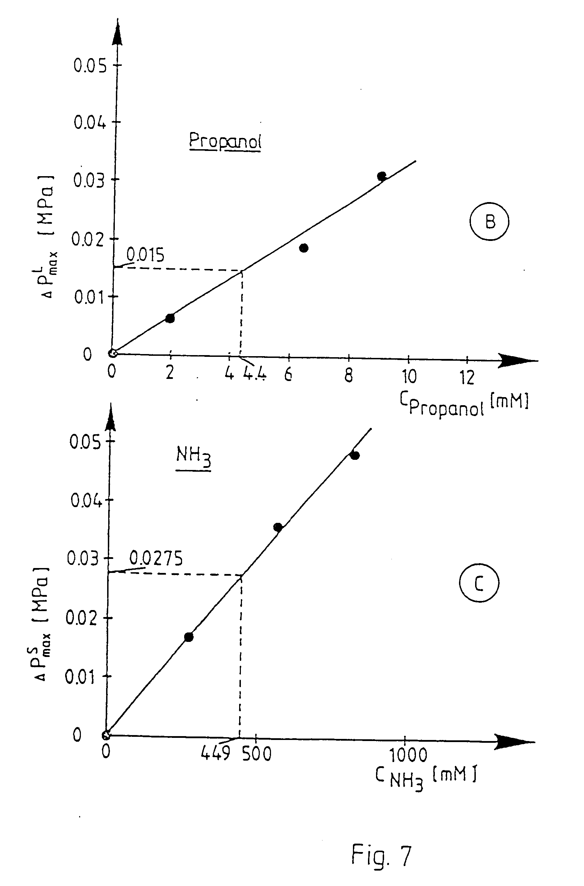

Permeierende Substanzen: $NH_3$ und Propanol-1; Lösungsmittel: Wasser. Die Zugabe eines Gemisches aus dem rasch permeierenden ($NH_3$) und dem langsam permeierenden (Propanol-1) Stoff ergibt biphasische Relaxationen mit einer raschen (Geschwindigkeitskonstante: $k_s$) und einer langsamen (Geschwindigkeitskonstante: $k_L$) Komponente. Für genügend lange Zeiten t nach der Zugabe ist der Druckabfall praktisch nur noch durch $k_L$ bestimmt, da der rasch permeierende Stoff dann äquilibriert ist (Fig. 7A). In der semilogarithmischen Auftragung gegen die Zeit erhält man für diese Zeiten aus der Steigung $k_L$ und durch Extrapolation auf t = 0 auch den Anfangswert, $\Delta P_{max}^L$, von Propanol-1. Nach der Eichung ergibt dies dann auch $^cPropanol$ (Fig. 7B). Es ist:

$$\Delta P^L = \Delta P_{max}^L \cdot \exp(-k_L \cdot t) \qquad (1)$$

und

$$^cPropanol = {}^KPropanol \cdot \Delta P_{max}^L \qquad (2)$$

Einen der Glg. (1) entsprechenden Zusammenhang für den rasch permeierenden Stoff erhält man durch Differenzbildung, da $\Delta P = \Delta P^s + \Delta P^L$ ist. Es gilt dann auch:

$$\Delta P^S = \Delta P_{max}^S \cdot \exp(-k_S \cdot t) \qquad (3)$$

und

$$C_{NH_3} = K_{NH_3} \cdot \Delta P_{max}^S \qquad (4)$$

Die Eichung erfolgte mit Lösungen unterschiedlicher Konzentrationen von $NH_3$ und Propanol-1, woraus sich ergab:

| $C_{NH_3}$ (mM) | 276 | 553 | 826 |
|---|---|---|---|
| $\Delta P_{max}^S$ (MPa) | 0,170 | 0,359 | 0,486 |

bzw.

| $C_{Propanol}$ (mM) | 2,0 | 6,5 | 9,0 |
|---|---|---|---|
| $\Delta P^{L}_{max}$ (MPa) | 0,060 | 0,192 | 0,322 |

In einem Gemisch wurden $\Delta P^{L}_{max}$ = 0,0015 MPa und $\Delta P^{S}_{max}$ = 0,0275 MPa gefunden, was die Konzentrationen von $C_{Propanol}$ = 4,4 mM und $C_{NH3}$ = 449 mM ergab Fig.7B,C).

e) Bestimmung der Konzentrationen permeierender Stoffe aus der Anfangsneigung $((dP/dt)_{t=0})$.

Die Methode ist anwendbar für einen permeierenden Stoff in Gegenwart oder in Abwesenheit nichtpermeierender Stoffe. $(dP/dt)_{t=0}$ ist bei gegebener Membran und konstanter Temperatur der Permeabilität des Stoffes, dem effektiven Oberfläche/Volumen-Verhältnis der osmotischen Zelle sowie der Konzentration proportional, so daß:

$$\left(\frac{dP}{dt}\right)_{t=0} = K \cdot C \qquad (5)$$

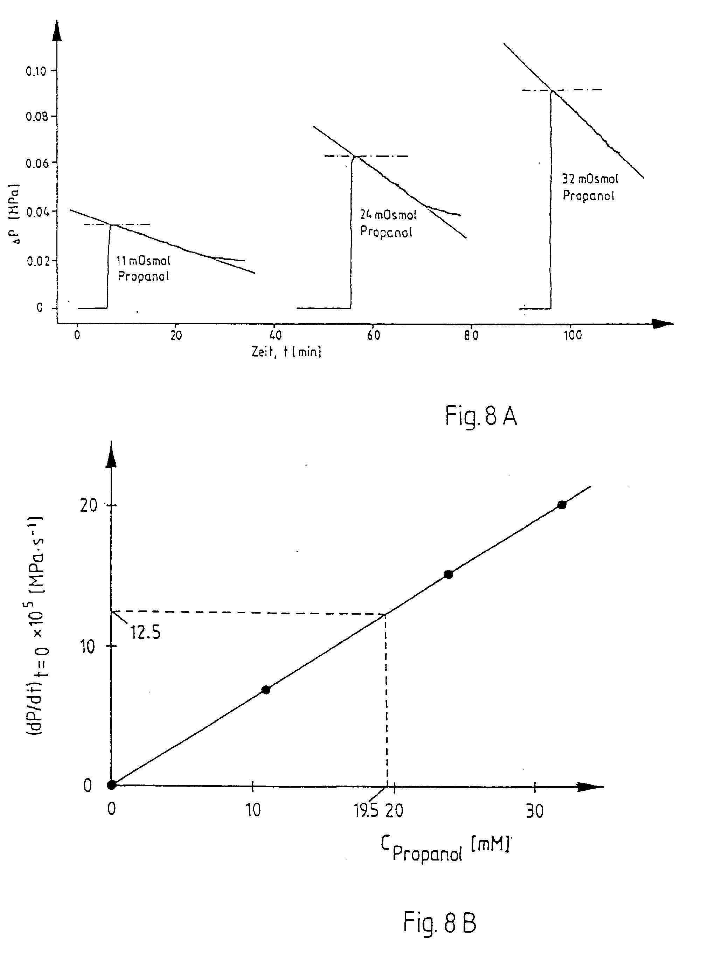

ist. Durch Eichung mit bekannten Konzentrationen wird die Apparatekonstante K bestimmt (Fig. 8A,B). Die Eichung ergab:

| $C_{Propanol}$ (mM) | 11 | 24 | 32 |
|---|---|---|---|
| $(dP/dt)_{t=0} \cdot x10^{5}$ (MPa/s) | 6,86 | 15,06 | 20,31 |
| $\Delta P_{max}$ (MPa) | 0,0344 | 0,0624 | 0,0928 |

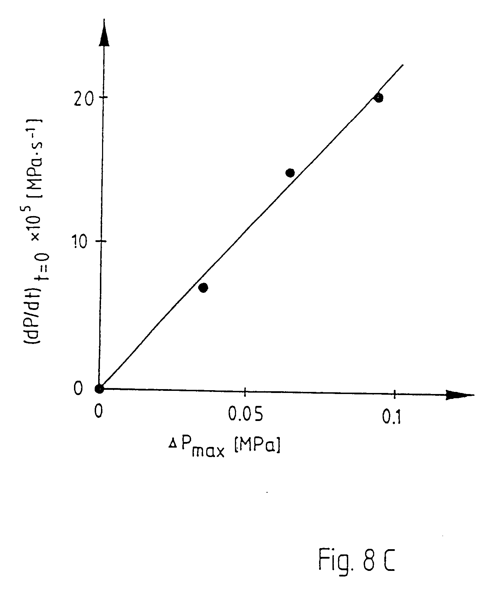

worauf ein $(dP/dt)_{t=0}$ = 12,5 x · $10^{-5}$ MPa s$^{-1}$ mit einer Lösung mit einer unbekannten Konzentration $C_{Propanol}$ = 19,5 mM lieferte (Fig. 8B). Die Fig. 8C zeigt, daß auch $(dP/dt)_{t=0}$ und $\Delta P_{max}$ linear voneinander abhängen.

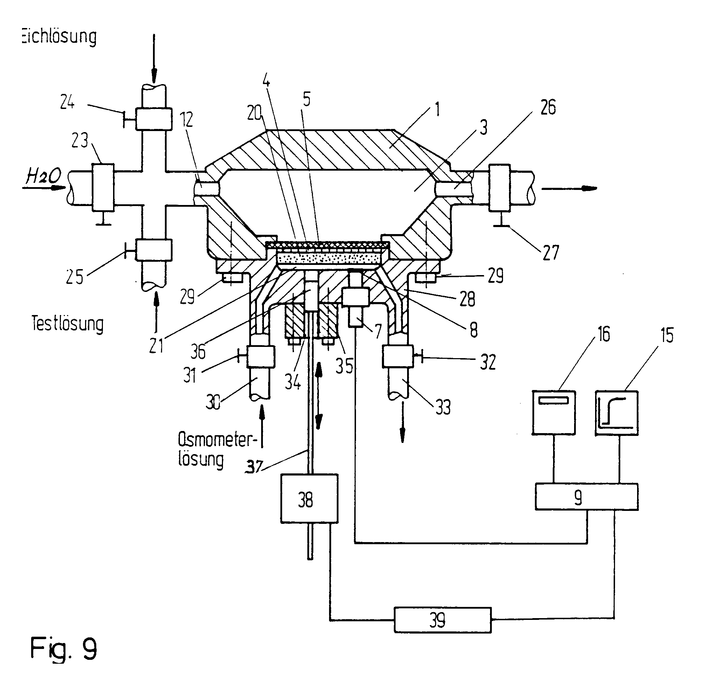

In Figur 9 ist schematisch im Teilschnitt eine weitere Meßeinrichtung zur Durchführung des Verfahrens nach Patentanspruch 3 ff. dargestellt, die im wesentlichen übereinstimmend mit Figur 1, aus einem geschlossenen, starre Wandungen aufweisenden Gehäuse 1 mit dicken druckbelastbaren Wandungen besteht. In diesem Gehäuse 1 ist eine zweite Kammer 3 vorgesehen, in die über die Zuleitung 12 wahlweise Eichlösung, Wasser oder die Testlösung eingegeben wird. Zu diesem Zweck sind in der Zuleitung 12 Ventile 23, 24 und 25 jeweils vorgesehen, die zum Öffnen des Zuflusses geöffnet und während der Meßphase geschlossen sind. Auf der Ausgangsseite der Einrichtung ist am Abfluß 26 ebenfalls eine Ventil 27 vorgesehen, über das die Testlösung bzw. die Kalibrierlösung und das Wasser abfließen kann. Die Pfeile symbolisieren die Flußrichtung.

An dem Gehäuse 1 ist ein zweiter Gehäuseteil 28 mittels symbolisch dargestellter Schrauben 29 angeschraubt. Es versteht sich, daß entsprechende Dichtungsmittel zwischengefügt sind. In dem zweiten Gehäuseteil 28 ist eine erste Kammer 21 vorgesehen, in der abgedichtet die osmotische Zelle, z. B. eine Algenzelle, eine Internodialzelle von Characeen oder eine keramische Zelle oder eine Zelle, die aus Glassintermaterial oder aus Kunststoff besteht, vorgesehen ist. Diese Zelle 20 ist hinterlegt durch eine Membran 4, der in diesem Fall ein Stützgitter 5 zur Erhöhung des Elastizitätskoeffizienten aufgelegt ist. Die Anordnung wird von den beiden Gehäuseteilen 1 und 28 dichtend eingeklemmt. Damit unterscheidet sich die Membrananordnung nicht von der in der Figur 1. Sie kann ebenso auch durch eine Anordnung gemäß den Figuren 2 und 3 ersetzt werden.

Der ersten Kammer 21 wird die Osmometerlösung über eine Zuleitung 30 zugeführt. Zu diesem Zweck ist ein Ventil 31 in der Zuleitung und ein weiteres Ventil 32 in der Abflußleitung 33 vorgesehen, um die Osmometerlösung austauschen zu können. Auf diese gesonderte Anordnung kann ebenso verzichtet werden, wenn über die zweite Kammer 3 die Osmometerlösung eingegeben wird.

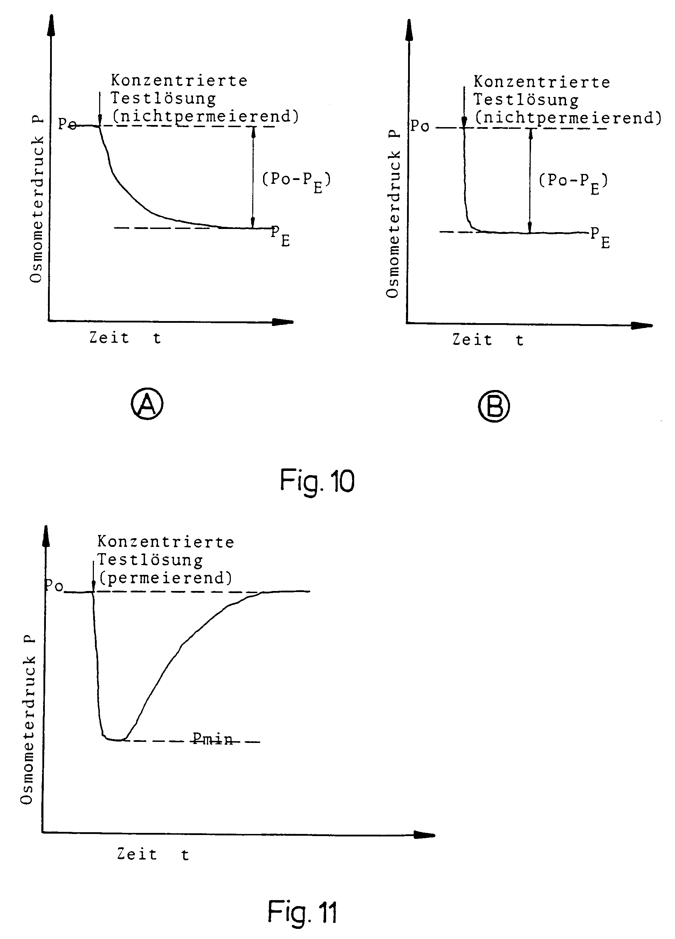

Abweichend von dem Beispiel in Figur 1 ist nur eine Druckmeßeinrichtung 7 mit einem Drucksensor 8 in der ersten Kammer, nämlich der Kammer, in der die osmotische Zelle 20 sich befindet, vorgesehen. Der Druckwandler 7 ist fest in dem Gehäuseteil 28 verankert. Weiterhin ist abweichend vom Ausführungsbeispiel in Figur 1 nur eine Anordnung eingezeichnet, mittels der der Druck in der ersten Kammer 21 variiert werden kann. Zu diesem Zweck ist in dem Zylinder 34, der durch einen Aufsatzteil 35, der an dem Gehäuseteil 28 angeschraubt ist, verlängert ist, vorgesehen. In diesem Zylinder 34 ist weiterhin ein verschiebbarer Kolben 36, z. B. in Form eines abgedichteten Regelstabes vorgesehen, der mittels einer Zugdruckstange 37, die verlängert aus dem Antriebsaggregat 38 hervorsteht, gesteuert heraus- oder hineingeschoben wird. Weiterhin weist in Übereinstimmung mit Figur 1 die Meßeinrichtung eine elektrische Verbindung zwischen dem Druckwandler und der Meßerfassungseinrichtung, einen zentralen Rechner 9 auf, an dessen beiden Ausgängen eine analoge Sichtanzeige 15 oder eine digitale Anzeige bzw. ein Drucker 16 anschließbar ist. Der Rechner kann unmittelbar Bestandteil eines Regelkreises sein. Es ist aber auch möglich an einem weiteren Ausgang eine Regelschaltung 39 anzuschließen, die ihrerseits das Antriebsaggregat 38 der Zugdruckstange, entsprechend dem gemessenen zeitlichen Druckverlauf in der ersten Kammer 21 steuert. Wie im Ausführungsbeispiel nach Figur 1 wird durch die Membran 4 die erste Kammer von der zweiten Kammer getrennt. Die osmotische Zelle weist ein hohes Oberflächen/Volumenverhältnis auf und eine große Starrheit, die durch das Stützgitter 5 noch erhöht wird. Der Regelstab bzw. Regelkolben 36 wird mit Hilfe des Antriebsaggregates 38 bewegt, so daß der hydrostatische Druck in der Zelle 21 erhöht oder gemindert wird. Bei der Messung wird der Druck mit Hilfe des Kolbens 36 derart manipuliert, bis der Volumen (Wasser)-fluß über der Membran den Wert 0 annimmt. Die Regelung hierfür erfolgt über den Rechner 9 und die Regelschaltung 39 in Abhängigkeit des momentan gemessenen Druckes in der Meßkammer 21 mit dem Druckwandler 17. Wird nun in die zweite Kammer eine Testlösung bestimmter Konzentration eingelassen, so wird mit Hilfe des Kolbens 36 der hydrostatische Druck in der ersten Zelle 21 so eingeregelt, daß der differentielle Druckverlauf über die Zeit den Wert 0 annimmt, d.h., auch die Veränderung des Volumens über die Zeit wird 0. Bei einer Konzentrationserhöhung gegenüber einer Bezugslösung bekannter Konzentration wird durch Herausfahren des Kolbens 36 der Innendruck soweit abgesenkt, daß ebenfalls die Bedingung $dP/dt = 0$ erfüllt ist, was aus Figur 10B ersichtlich ist. Bei einer Minderung der Konzentration wird der Druck entsprechend erhöht. Es handelt sich hierbei also um die gleiche Nullmethode gemäß dem Verfahren nach Anspruch 1 und den vorher beschriebenen Ausführungsbeispielen, bei der allerdings nur eine Druckmeßeinrichtung erforderlich ist. Aus Figur 10B ist gegenüber dem bekannten Stand der Technik nach Fig. 10A deutlich die wesentlich kürzere Meßzeit sichtbar. Figur 10A zeigt die Meßzeit nach dem herkömmlichen Verfahren gemäß der DE-OS 35 25 686, die wesentlich länger ist. Die in Figur 10A und 10B dargestellte Druckänderung ($P_o - P_E$) ist ein Maß für die Konzentrationsänderung eines nichtpermeierenden Stoffes in einer Lösung, das nach vorheriger Äquilibrierung der Zelle mit einer Bezugslösung zugegeben wird. Die Meßzeit kann, wie der Verlauf bei gleichen nichtpermeierenden Testlösungen nach Fig. 10B zeigt, auf einen Bruchteil der bisherigen Meßzeit verkürzt werden.

Für den Fall, daß ein permeierender Stoff vorliegt, läßt sich die Methode ebenfalls anwenden. Die Meßkurven sind dann biphasisch, d.h. bei einer Konzentrationserhöhung wird nach dem Erreichen eines Minimums eine Teilchenphase beobachtet, deren Länge allerdings nicht beeinflusst werden kann, wie die Fig. 11 zeigt. Bei Anwesenheit sowohl eines permeierenden als auch eines nichtpermeierenden Stoffes erhält man schließlich eine Überlagerung der Effekte, wie bereits anhand der vorhergehenden Figuren dargestellt worden ist.

Die Meßzeit hängt im wesentlichen von der Ansprechzeit der osmotischen Zelle ab, die wiederum durch die Halbwertzeit des Wasseraustausches bestimmt wird, d.h.,das Oberfläche/Volumenverhältnis und der Elastizitätsmodul der Zelle und die hydraulische Leitfähigkeit der Zellmembran sollten auch in dieser Einrichtung möglichst groß sein. Die Regelgröße ist die zeitliche Änderung des Druckes ($dP/dt$) in der ersten Kammer, der Meßkammer, die auf 0 eingestellt wird, so daß der Druck möglichst genau erfaßt werden kann. Der Druckwandler 7 erzeugt elektrische Ausgangssignale, die dem Druck in der Zelle 21 proportional sind. Diese Signale werden digitalisiert und vom Rechner 9 ausgewertet. Anhand des Druckverlaufes, der in der Analoganzeige 15 angezeigt werden kann oder auch ausgedruckt wird, können die Konzentrationen der permeierenden und nichtpermeierenden Stoffe in der Lösung festgestellt werden. Der Rechner gibt die ermittelten Werte auch an die Regelschaltung 39 aus, die ihrerseits ein Steuersignal erzeugt, das das Antriebsaggregat 38, z. B. ein Motor, derart steuert, daß die Zugdruckstange 37 aus- oder eingefahren wird, wodurch über den mitgenommenen Kolben das Volumen der Meßkammer 21 verändert wird. Diese Regelung erfolgt stufenweise in kleinen Schritten in Abhängigkeit vom jeweiligen Druckverlauf in der osmostischen Zelle bis der Wasserfluß durch die Membran 4 beendet, d.h. auf den Wert 0 zurückgegangen ist. Selbstverständlich kann auch eine weitere Meßanordnung in der zweiten Zelle 3 vorgesehen sein, wie sie anhand des Beispieles 1 und der dargestellten Diagramme beschrieben ist.

**Patentansprüche**

1. Verfahren zur Bestimmung des Gehaltes von in einem Lösungsmittel gelösten Stoffen mittels eines Osmometers, bestehend aus einem Zweikammersystem mit einer osmotischen Zelle und einer Druckmeßeinrichtung zur Messung des hydrostatischen Druckes in der einen, starre Wandungen aufweisenden Kammer, in die über Zu- und Ableitungen entweder Osmometerlösungen oder reine Lösungsmittel einfüllbar oder entnehmbar sind, und mit einer zweiten, ebenfalls starre Wandungen aufweisenden Kammer, in die über weitere Zu- und Ableitungen entweder zu untersuchende Meßlösungen oder Lösungsmittel, Bezugs- oder Kalibrierlösungen ein- oder abgelassen werden, zwischen welche Kammern eine Membran zwischengefügt ist, über die die in der osmotischen Zelle befindliche Osmometerlösung mit der Lösung in der zweiten Kammer in Verbindung gebracht wird, wobei der Austausch der zu untersuchenden Stoffe verschieden schnell erfolgt, das in der zweiten Kammer (3) enthaltene Lösungsmittel, die Bezugs- oder Kalibrierlösung, gegen eine Meßlösung ausgetauscht wird und mit der Druckmeßeinrichtung (7, 8) in der ersten Kammer (2) der Druck in der osmotischen Zelle, die eine inkompressible Membrananordnung (4, 5, 6, 5A, 5B) aufweist, gemessen wird, **dadurch gekennzeichnet**, daß der Druck in der zweiten Kammer (3) derart variiert wird, daß der Druck in der osmotischen Zelle (17, 18) während der Messung des Druckes in Abhängigkeit von der Zeit in der zweiten Kammer (3) mit einer Druckmeßeinrichtung (13, 14) konstant bleibt, und daß der mit der Druckmeßeinrichtung (13, 14) gemessene Druckverlauf, der ein Maß der Konzentration der nichtpermeierenden und permeierenden Stoffe ist, bzw. dessen Wert proportional den Flüssen der permeierenden Stoffe der Meßlösung zwischen der osmotischen Zelle (2) und der zweiten Kammer (3) ist, mit einer Anzeigeeinrichtung angezeigt oder in einer Auswertschaltung ausgewertet wird.

2. Verfahren nach Anspruch 1, **gekennzeichnet durch** folgende Verfahrensschritte:
   a) In der osmotischen Zelle wird bei Atmosphärendruck oder künstlich erzeugtem Arbeitsdruck durch Zuführung der Osmometerlösung oder des reinen Lösungsmittels entweder durch direkte Eingabe oder durch Eingabe in die zweite Kammer ein konstanter Arbeitsdruck aufgebaut.
   b) Die sich in der zweiten Kammer befindende Lösung wird gegen die Meßlösung ausgetauscht.
   c) Der Druck in der zweiten Kammer wird derart variiert, daß die treibende Kraft für den Volumenfluß durch die Membran gerade kompensiert wird.
   d) Der eingestellte Kompensationsdruck in der zweiten Kammer wird gemessen, wobei das erreichte, kompensierende maximale Druckniveau in der zweiten Kammer proportional der Konzentration der permeierenden und nichtpermeierenden Stoffe in der Meßlösung ist und entsprechend dem Gehalt permeierender Stoffe exponentiell mit differentiellem Kurvenverlauf auf das ursprüngliche Druckniveau oder auf das konstante, dem Gehalt der nichtpermeierenden Stoffe proportionale Druckniveau abfällt.
   e) Die Konzentration der nichtpermeierenden Stoffe und/oder der permeierenden Stoffe wird aus den maximalen Drücken nach Maßgabe von Eichwerten oder aus folgender Beziehung ermittelt:
   Nichtpermeierender Stoff: $P = \pi = R \cdot T \cdot C$,
   wobei

   $\pi$ der osmotische Druck,
   C die Konzentration,
   R = 8,31434 J/°K mol und
   T die absolute Temperatur ist,
   Permeierender Stoff: $\Delta P = \sigma \cdot \pi$,
   wobei $\sigma$ der Reflexionskoeffizient des Stoffes ist.

3. Verfahren zur Bestimmung des Gehaltes von in einem Lösungsmittel gelösten Stoffen mittels eines Osmometers, bestehend aus einem Zweikammersystem mit einer osmotischen Zelle und einer Druckmeßeinrichtung zur Messung des hydrostatischen Druckes in der einen, starre Wandungen aufweisenden Kammer, in die über Zu- und Ableitungen entweder Osmometerlösungen oder reine Lösungsmittel einfüllbar oder entnehmbar sind, und mit einer zweiten, ebenfalls starre Wandungen aufweisenden Kammer, in die über weitere Zu- und Ableitungen entweder zu untersuchende Meßlösungen oder Lösungsmittel, Bezugs- oder Kalibrierlösungen ein- oder abgelassen werden, zwischen welche Kammern eine Membran zwischengefügt ist, über die die in der osmotischen Zelle befindliche Osmometerlösung mit der Lösung in der zweiten Kammer in Verbindung gebracht wird, wobei der Austausch der zu untersuchenden Stoffe verschieden schnell erfolgt, das in der zweiten Kammer (3) enthaltene Lösungsmittel, die Bezugs- oder Kalibrierlösung, gegen eine Meßlösung ausgetauscht wird und mit der Druckmeßeinrichtung (7, 8) in der ersten Kammer der Druck in der osmotischen Zelle gemessen wird, dadurch gekennzeichnet, daß der Druck in der ersten Kammer (21) derart variiert wird, daß die treibende Kraft für den Volumenfluß durch die Membran kompensiert wird, und daß der mit der Druckmeßeinrichtung (7, 8) gemessene Druckverlauf, der ein Maß der Konzentrationen der nichtpermeierenden und permeierenden Stoffe ist bzw. dessen Wert proportional den Flüssen der permeierenden Stoffe der Messlösung zwischen der osmotischen Zelle (20) und der zweiten Kammer (3) ist, mit einer Anzeigeeinrichtung (15) angezeigt oder in einer Auswerteschaltung (9) ausgewertet wird.

4. Verfahren nach Anspruch 3, **gekennzeichnet durch** folgende Verfahrensschritte:
   a) In der osmotischen Zelle (20) wird bei Atmosphärendruck oder künstlich erzeugtem Arbeitsdruck durch Zuführung der Osmometerlösung oder des reinen Lösungsmittels entweder durch direkte Eingabe oder durch Eingabe in die zweite Kammer (3) ein Arbeitsdruck aufgebaut.
   b) Die sich in der zweiten Kammer (3) befindende Lösung wird gegen die Meßlösung ausgetauscht.
   c) Der Druck in der ersten Kammer (21) wird derart variiert, daß die treibende Kraft für den Volumenfluß durch die Membran gerade kompensiert wird, so daß dP/dt = 0 wird.
   d) Der eingestellte Kompensationsdruck in der ersten Kammer wird fortlaufend gemessen, wobei das erreichte kompensierende maximale Druckniveau in der ersten Kammer (21) proportional der Konzentration der permeierenden und nichtpermeierenden Stoffe in der Meßlösung ist und entsprechend dem Gehalt der permeierenden Stoffe exponentiell mit differentiellem Kurvenverlauf auf das ursprüngliche Druckniveau oder auf das konstante, dem Gehalt der nichtpermeierenden Stoffe proportionale Druckniveau abfällt.

5. Verfahren nach einem der vorhergehenden Ansprüche, dadurch gekennzeichnet, daß der Arbeitsdruck in der osmotischen Zelle gegenüber dem Druck in der zweiten Kammer vor dem Eingeben der Meßlösung auf einen Unterdruck oder auf einen negativen Druck eingestellt wird.

6. Verfahren nach einem der Ansprüche 1 bis 4, dadurch gekennzeichnet, daß zur Bestimmung der Gehalte der einzelnen permeierenden Stoffe die zugeordneten Exponentialfunktionen des differentiellen Kurvenverlaufs nach der Digitalisierung in einem Computer errechnet und zur Stoffanalyse mit vorhandenen eingespeicherten Werten von Kurvenverläufen bekannter Stoffe verglichen werden.

7. Verfahren nach einem der Ansprüche 1 bis 5, **dadurch gekennzeichnet**, daß während der Messung das Zweikammersystem des Osmometers, die Osmometerlösung sowie die Bezugs- und Kalibrierlösung und die Meßlösung auf ein bestimmtes Temperaturniveau eingestellt und gehalten werden.

8. Verfahren nach einem der vorhergehenden Ansprüche, **dadurch gekennzeichnet**, daß als Osmometerlösung ein reines Lösungsmittel oder ein Lösungsmittel verwendet wird, das Substanzen enthält, die in der Bezugslösung der zu untersuchenden Meßlösung enthalten sind.

9. Einrichtung zur Bestimmung des Gehaltes eines in einem Lösungsmittel gelösten Stoffes zur Durchführung des Verfahrens nach einem der Ansprüche 1, 2 oder 5 bis 8 mit einer ersten Kammer (2), in der eine osmotische Zelle (17, 18) und eine Druckmeßeinrichtung (7, 8) angeordnet sind, mit einem Einlaß- oder Auslaßventil für die Zu- oder Ableitung der Osmometerlösung, und einer zweiten Kammer (3) mit Einlaß- und Auslaßventilen (10) für die Zu- und Ableitung einer Bezugs-, Kalibrier-, oder Meßlösung und/oder Osmometerlösung bzw. eines reinen Lösungsmittels, zwischen welche Kammern eine Membran zwischengefügt ist, **gekennzeichnet durch** eine starre osmotische Zelle (17, 18) mit einer Membran (4, 6), die entweder durch ein starres Stützgitter (5, 5A, 5B) unterlegt ist und/oder durch einen Unterdruck oder durch einen negativen Druck in der osmotischen Zelle (17, 18) auf dieser fest aufliegt, eine Ventilanordnung (10) in den Zu- und Ableitungen (12) der Meßkammer (3), über die vor dem Meßvorgang zum Variieren des Druckes in der Meßkammer (3) Meßlösung zu- oder abgeführt werden kann, oder eine Verstelleinrichtung zur Druckvariation durch Änderung des Volumens der zweiten Kammer (3), und eine Druckmeßeinrichtung (13, 14) zur Ermittlung des momentanen Druckes in der Meßkammer (3) und zur Ermittlung des Druckverlaufes während der Austauschzeit der zu untersuchenden Stoffe.

10. Einrichtung nach Anspruch 9, **dadurch gekennzeichnet**, daß eine Steuereinrichtung (9) für die Ventil- und Pumpensteuerung (11) zur Erhöhung des Druckes in der Meßkammer (3) oder für die Verstelleinrichtung vorgesehen ist und daß eine Meßwerterfassungsvorrichtung (7, 8, 9) vorgesehen ist, die den Druckabfall beim Volumenfluß aus der osmotischen Zelle (17, 18) in dieser feststellt und eine proportionale Steuergröße ermittelt, die entweder die Ventilsteuervorrichtung (10) in den Zu- und Ableitungen der Meßzelle oder eine Druckerhöhungseinrichtung (11), Pumpe, in der Zuleitung (12) oder die Volumen-Verstelleinrichtung derart steuert, daß die Kraft des Volumenflusses kompensiert wird, wobei auch der Arbeitsdruck in der zweiten Kammer (3) zumindest kurzfristig während eines Maximums bei geschlossenen Ventilen (10) in den Zu- und Ableitungen der Meßkammer (3) konstant bleibt.

11. Einrichtung zur Bestimung des Gehaltes eines in einem Lösungsmittel gelösten Stoffes zur Durchfühung des Verfahrens nach einem der Ansprüche 3 bis 8 mit einer ersten Kammer (21), in der eine osmotische Zelle (20) und der Sensor (8) einer Druckmeßeinrichtung (7) angeordnet sind, mit einem Einlaß und Auslaß für die Zuöder Ableitung der Osmometerlösung und mit einer zweiten Kammer (3) mit Zu- und Ableitungen für eine Bezugs-, Kalibrier- oder Messlösung und/oder Osmometerlösung bzw. eines reinen Lösungsmittels, zwischen welche Kammern ein Membran zwischengefügt ist, **gekennzeichnet durch** eine dünnwandige, ein Verhältnis des Volumens zur effektiven Oberfläche von höchstens 0,2 mm aufweisende osmotische Zelle (20) mit einer Membran (4), die auf der osmotischen Zelle (20) aufliegt, eine Druckmeßwerterfassungseinrichtung (9, 7, 8) zur Ermittlung des momentanen Druckes in der ersten Kammer (21) und zur Ermittlung des Druckverlaufs während der Austauschzeit der zu untersuchenden Stoffe, und eine Verstelleinrichtung (38, 37, 39) zum Varriieren des Druckes durch Änderung des Volumens der ersten Kammer (21) in Abhängigkeit von dem ermittelten Druckverlauf, mit einem verschiebbaren Kolben (36), der mit Druckmittel beaufschlagt oder mechanisch mit einem Motor oder mit einer manuell betätigbaren Verschiebeeinrichtung gekoppelt ist.

12. Einrichtung nach Anspruch 11, **dadurch gekennzeichnet**, daß der Druckkolben (36) als Regelstab in einem Zylinder (34) oder Kanal gelagert ist, der in der ersten Kammer (21) mündet und daß der Regelstab von einem Antrieb (38) in Abhängigkeit der erfaßten Istgröße des gemessenen Druckes über einen Regelkreis (39), der den Antrieb (38) steuert, derart in gewissen Grenzen variiert wird, bis die Bedingung dP/dt = 0 für den zeitlichen Verlauf des Osmometerdruckes (P) erfüllt ist.

13. Einrichtung nach Anspruch 12, **dadurch gekennzeichnet**, daß eine elektronische Regelschaltung (39) vorgesehen ist, die einen elektrischen Motor oder eine hydraulische Steuereinrichtung steuert, deren Bewegung auf den Regelstab (36) transferiert wird.

14. Einrichtung nach einem der Anspürche 9 bis 13, **dadurch gekennzeichnet**, daß die osmotische Zelle (20) aus einem inkompressiblen mit Lösung getränkten porösen Körper aus Glassintermaterial, Keramik, Kunststoff oder aus einem beidseitig mit einem Stützgitter unterlagerten Lösungsfilm besteht und daß die Membran eine Hyperfiltrationsmembran oder eine Hohlfasermembran ist.

15. Einrichtung nach einem der Ansprüche 9 bis 14, **dadurch gekennzeichnet**, daß die Druckmeßeinrichtung (7, 8; 13, 14) in der zweiten Kammer (3) und/oder in der ersten Kammer (21) ein elektrischer Druckwandler mit einer Anordnung ist, die den gemessenen hydrostatischen Druck in einen auswertbaren elektrischen analogen oder digitalen Meßwert umsetzt, und daß die Meßeinrichtung mit den Eingängen eines Computers (9) verbunden ist, und daß der Computer nach eingeschriebenen Programmen die Steuergrößen für die Druckregler zur Kompensation der konzentrationsabhängigen Kraft beim Austausch des Lösungsmittels bzw. der permeablen Stoffe der Osmometerlösung ermittelt und die gemessenen Werte des Druckverlaufes in der zweiten Kammwer (3) und/oder der ersten Kammer (21) speichert und auswertet, wobei dieser über angeschlossene Anzeigegeräte (15) kurvenmäßig dargestellt oder mittels Drucker (16) ausdruckbar ist.

16. Einrichtung nach einem der Ansprüche 9 bis 15, **dadurch gekennzeichnet**, daß die osmotische Zelle (17, 18) eine Schichtdicke von $\leq$ 0,2 mm bis 0,3 mm aufweist.

## Claims

1. Method for determining the concentrations of substances,which are dissolved in a solvent, by means of an osmometer, consisting of a two-chamber system with an osmotic cell and a pressure-measuring device for measuring of the hydrostatic pressure in the one chamber, which has rigid walls and in which either osmometer solutions or pure solvent are fillable or removable by way of feed and delivery ducts, and with a second chamber, which similarly has rigid walls and in which either the measurement solutions to be tested or solvent, reference or calibration solutions are admitted or discharged by way of further feed and delivery ducts, between which chambers is interposed a membrane by way of which the osmometer solution disposed in the osmotic cell is brought into contact with the solution in the second chamber, whereby the exchange of the substances to be tested takes place at different rates, the solvent, the reference solution or the calibration solution contained in the second chamber (3) is exchanged with a measurement solution and the pressure in the osmotic cell, which has an incompressible membrane arrangement (4, 5, 6, 5A, 5B), is measured by the pressure-measuring device (7, 8) in the first chamber (2), characterised thereby that the pressure in the second chamber (3) is varied in the manner that the pressure in the osmotic cell (17, 18) remains constant during the measuring of the pressure in dependence on time in the second chamber (3) by a pressure-measuring device (13, 14), and that the pressure course, which is measured by the pressure-measuring device (13, 14) and which is a measure of the concentration of the non-permeating and the permeating substances or the value of which is proportional to the flows of the permeating substances of the measurement solution between the osmotic cell (2) and the second chamber (3), is indicated by an indicating device or evaluated in an evaluating circuit.

2. Method according to claim 1, characterised by the following method steps:

a) A constant working pressure is built up in the osmotic cell at atmospheric pressure or artificially generated working pressure through feed of the osmometer solution or of the pure solvent either by direct input or by input into the second chamber.

b) The solution disposed in the second chamber is exchanged with the measurement solution.

c) The pressure in the second chamber is varied in the manner that the motive force for the volume flow through the membrane is just compensated for.

d) The set compensating pressure in the second chamber is measured, wherein the attained compensating maximum pressure level in the second chamber is proportional to the concentration of the permeating and non-permeating substances in the measurement solution and corresponding to the content of permeating substances decays exponentially with differential course of curve to the original pressure level or to the constant pressure level proportional to the content of non-permeating substances.

e) The concentration of the non-permeating substances and/or of the permeating substances is determined from the maximum pressures in proportion to calibration values or from the following equation:

$$\text{non-permeating substance} : P = \pi = R \cdot T \cdot C,$$

wherein

$\pi$ is the osmotic pressure,

C is the concentration,

R = 8.31434 J/°K mol, and

T is the absolute temperature,

$\Delta P = \sigma \cdot \pi$ permeating substance

wherein $\sigma$ is the reflection coefficient of the substance.

3. Method for determining the concentrations of substances,which are dissolved in a solvent, by means of an osmometer, consisting of a two-chamber system with an osmotic cell and a pressure-measuring device for measuring of the hydrostatic pressure in the one chamber, which has rigid walls and in which either osmometer solution or pure solvent are fillable or removable bymeansof feed and delivery ducts, and with a second chamber, which similarly has rigid walls and in which either the measurement solutions to be tested or solvent, reference or calibration solutions are admitted or discharged by way of further feed and delivery ducts, between which chambers is interposed a membrane by way of which the osmometer solution disposed in the osmotic cell is brought into contact with the solution in the second chamber, whereby the exchange of the substances to be tested takes place at different rates , the solvent, the reference solution or the calibration solution contained in the second chamber (3) is exchanged with a measurement solution and the pressure in the osmotic cell is measured by the pressure-measuring device (7, 8) in the first chamber (2), characterised thereby that the pressure in the first chamber (21) is varied in the manner that the motive force for the volume flow through the membrane is compensated for, and that the pressure course, which is measured by the pressure-measuring device (7, 8) and which is a measure of the concentration of the non-permeating and the permeating substances or the value of which is proportional to the flows of the permeating substance of the measurement solution between the osmotic cell (20) and the second chamber (3), is indicated by an indicating device (15) or evaluated in an evaluating circuit (9).

4. Method according to claim 3, characterised by the following method steps:

a) A constant working pressure is built up in the osmotic cell (20) at atmospheric pressure or artificially generated working pressure through feed of the osmometer solution or of the pure solvent either by direct input of by input into the second chamber (3).

b) The solution disposed in the second chamber (3) is exchanged with the measurement solution.

c) The pressure in the first chamber (21) is varied in the manner that the motive force for the volume flow through the membrane is just compensated for, so that dP/dt is = to 0.

d) The set compensating pressure in the first chamber is continuously measured, whereby the attained compensating maximum pressure level in the first chamber (21) is proportional to the concentration of the permeating and non-permeating substances in the measurement solution and corresponding to the content of permeating substances decays exponentially with differential course of curve to the original pressure level or to the constant pressure level proportional to the content of non-permeating substances.

5. Method according to one of the preceding claims, characterised thereby that the working pressure in the osmotic cell relative to the pressure in the second chamber is set to an underpressure or to a negative pressure before the input of the measurement solution.

6. Method according to one of the claims 1 to 4, characterised thereby that for determining the content of the individual permeating substances the associated exponential functions of the differential course of curve are calculated in a computer after digitizing and for the substance analysis are compared with currently stored values of coursesof curves of known substances.

7. Method according to one of the claims 1 to 5, characterised thereby that during the measurement the two-chamber system of the osmometer, the osmometer solution as well as the reference and calibrating solution and the measurement solution are adjusted to and kept at a specific temperature level.

8. Method according to one of the preceding claims, characterised thereby that a pure solvent, or a solvent which contains the substances that are contained in the reference solution of the measurement solution to be tested are used as osmometer solutions.

9. Equipment for determining the content of a substance, which is dissolved in a solvent, for the carrying out of the method according to one of the claims 1, 2 or 5 to 8, with a first chamber (2), in which an osmotic cell (17, 18) and a pressure measuring device (7, 8) are arranged with an inlet valve or outlet valve for the admission or discharge of the osmometer solution, and a second chamber (3) with inlet and outlet valves (10) for the admission and discharge of a reference, calibration or measurement solution and/or osmometer solution or of a pure solvent, between which chambers is interposed a membrane, characterised by a rigid osmotic cell (17, 18) with a membrane (4, 6), which is either supported by a rigid support grid (5, 5A, 5B) and/or firmly rests on this by an underpressure or by a negative pressure in the osmotic cell (17, 18), a valve arrangement (10) the entry and exit ducts (12) of the measuring chamber (3), by way of which measurement solution can be fed in or led away for variation of the pressure in the measuring chamber (3) before the measuring process, or an adjusting device for pressure variation through changing of the volume of the second chamber (3), and a pressure measuring device (13, 14) for ascertaining of the pressure course during the exchange time of the substances to be tested.

10. Equipment according to claim 9, characterised thereby that a control device (9) for the valve and pump control (11) for the increasing of the pressure in the measuring chamber (3) or for the adjusting device is provided and that a device for detecting measured values (7, 8, 9) is provided, which determines the volume flow out of the osmotic cell (17, 18) during the pressure decay in this and evaluates a proportional control parameter which adjusts either the valve control arrangement (10) in the entry and exit ducts of the measuring cell or a pressure-increasing device (11) (pump ) in the entry duct (12) or the volume adjusting device in such a manner that the force during the volume flow is compensated for, whereby also the working pressure in the second chamber (3) remains constant at least for a short time while at a maximum when the valves (10) in the entry and exit ducts of the measuring chamber (3) are closed.

11. Equipment for determining the content of a substance, dissolved in a solvent, for the carrying out of the method according to one of the claims 3 to 8, with a first chamber (21), in which an osmotic cell (20) and the sensor (8) of a pressure measuring device (7) are arranged, with an inlet and outlet for the admission or discharge of the osmometer solution and with a second chamber (3) with entry and exit ducts for a reference, calibration or measurement solution and/or osmometer solution or of a pure solvent, between which chambers is interposed a membrane, characterised by a thin-walled osmotic cell (20), which has a ratio of the volume to effective surface area of at most 0.2 millimetres, with a membrane (4), which rests on the osmotic cell (20), a detection device for measuring pressure volues (9, 7, 8) for ascertaining the instantaneous pressure in the first chamber (21) and for ascertaining the pressure course during the exchange time of the substances to be tested, and an adjusting device (38, 37, 39) for the varying of the pressure through changing of the volume of the first chamber (21) in dependence on the ascertained pressure course, with a displaceable piston (36), which is acted on by pressure means or is mechanically coupled to a motor or to a manually actuable displacing device.

12. Equipment according to claim 11, characterised thereby that the position of the pressure piston (36) is mounted as a regulating rod in a cylinder (34) or channel, which opens into the first chamber (21), and that the regulating rod is varied with in certain limits by a drive (38), in dependence on the detected actual magnitude of the measured pressure, by way of a regulating circuit (39), which controls the drive (38), until the condition dP/dt = 0 is fulfilled for the temporal course of the osmometer pressure (P).

13. Equipment according to claim 12, characterised thereby that an electronic regulating circuit (39) is provided, which controls an electric motor or a hydraulic control device, the movement of which is transferred to the regulating rod (36).

14. Equipment according to one of the claims 9 to 13, characterised thereby that the osmotic cell (20) consists of an incompressible porous body, which is saturated with solution, of sintered glass material, ceramic, plastics or of a solution film supported at both sides by a support grid and that the membrane is a hyperfiltration membrane or a hollow fibre membrane.

15. Equipment according to one of the claims 9 to 14, characterised thereby that the pressure measuring device (7, 8; 13, 14) in the second chamber (3) and/or in the first chamber (21) is an electric pressure transducer with an arrangement which converts the measured hydrostatic pressure into an evaluatable electric analog or digital measurement value, and that the measuring device is connected with the inputs of a computer (9), and that in accordance with stored programs the computer ascertains the control magnitudes for the pressure regulator for compensation of the concentration-dependent force during the exchange of the solvent or of the permeable substances of the osmometer solution, and stores and evaluates the measured values of the pressure course in the second chamber (3) and/or the first chamber (21), wherein this is represented in curve form by way of connected indicating apparatus (15) or is printable out by means of a printer (16).

16. Equipment according to one of claims 9 to 15, characterised thereby that the osmotic cell (17, 18) has a layer thickness equal to or smaller than 0.2 to 0.3 millimetres.

## Revendications

1. Procédé de détermination de la concentration de substances dissoutes dans un solvant au moyen d'un osmomètre constitué d'un système à deux chambres avec une cellule osmotique et un système de mesure de la pression pour la mesure de la pression hydrostatique dans l'une des chambres comportant des parois rigides, dans laquelle on peut introduire ou de laquelle on peut retirer par des conduites d'amenée et de sortie, soit des solutions osmométriques, soit des solvants purs, et avec une deuxième chambre comportant également des parois rigides, dans laquelle on introduit ou de laquelle on retire, par d'autres conduites d'amenée et de sortie, soit des solutions de mesure à étudier soit des solvants, des solutions de référence ou d'étalonnage, avec une membrane intercalée entre ces chambres et par l'intermédiaire de laquelle la solution osmométrique se trouvant dans la cellule osmotique est mise en communication avec la solution de la deuxième chambre, où l'échange des substances à étudier se fait plus ou moins vite, le solvant contenu dans la deuxième chambre (3), la solution de référence ou la solution d'étalonnage est échangé(e) contre une solution de mesure et la pression dans la cellule osmotique qui comporte un dispositif de membrane incompressible (4, 5, 6, 5A, 5B) est mesurée avec le système de mesure de la pression (7,8) dans la première chambre (2), caractérisé en ce qu'on fait varier la pression dans la deuxième chambre (3) de façon à ce que la pression dans la cellule osmotique (17, 18) reste constante pendant la mesure de la pression en fonction du temps dans la deuxième chambre (3) avec un système de mesure de la pression (13, 14), et en ce que l'évolution de la pression, mesurée avec le système de mesure de

15

la pression (13, 14), et qui représente une mesure de la concentration des substances pénétrantes et non pénétrantes, ou dont la valeur est proportionnelle aux flux des substances pénétrantes de la solution de mesure entre la cellule osmotique (2) et la deuxième chambre (3) est visualisée avec un dispositif d'affichage ou est exploitée dans un système pour l'interprétation des résultats.

2. Procédé selon la revendication 1, caractérisé par les étapes de procédé suivantes:

a) Dans la cellule osmotique on établit, à la pression atmosphérique ou à une pression de travail obtenue artificiellement, une pression de travail constante en y faisant entrer la solution osmométrique ou le solvant pur soit par introduction directe soit par introduction dans la deuxième chambre.

b) On échange la solution qui se trouve dans la deuxième chambre contre la solution de mesure.

c) On fait varier la pression dans la deuxième chambre de façon à compenser exactement la force d'entraînement du flux volumique à travers la membrane.

d) On mesure la pression compensatrice établie dans la deuxième chambre, le niveau de pression compensatrice maximal atteint dans la deuxième chambre étant proportionnel à la concentration des substances pénétrantes et non pénétrantes dans la solution de mesure, et chutant, en fonction de la concentration des substances pénétrantes, de façon exponentielle avec un tracé de courbes différentiel jusqu'au niveau de pression initial ou au niveau de pression constant proportionnel à la concentration des substances non pénétrantes.

e) On détermine la concentration des substances non pénétrantes et/ou des substances pénétrantes à partir des pressions maximales en se basant sur les valeurs d'étalonnage ou à partir de la relation suivante:

substance non pénétrante: $P = \pi = R \cdot T \cdot C$,

où

$\pi$ est la pression osmotique
C est la concentration
R = 8,31434 J/°K mole

et T est la température absolue,

substance pénétrante: $\Delta P = \sigma \cdot \pi$
où $\sigma$ est le coefficient de réflexion de la substance.

3. Procédé de détermination de la concentration d'une substance dissoute dans un solvant au moyen d'un osmomètre constitué par un système à deux chambres avec une cellule osmotique et un système de mesure de la pression pour la mesure de la pression hydrostatique dans l'une des chambres comportant des parois rigides, dans laquelle on peut introduire ou de laquelle on peut retirer, par des conduites d'amenée et de sortie, soit des solutions osmométriques, soit des solvants purs, et avec une deuxième chambre comportant également des parois rigides dans laquelle on introduit ou de laquelle on retire, par d'autres conduites d'amenée et de sortie, soit des solutions de mesure à étudier, soit des solvants, des solutions de référence ou d'étalonnage, avec une membrane intercalée entre ces chambres et par l'intermédiaire de laquelle la solution osmométrique se trouvant dans la cellule osmotique est mise en communication avec la solution de la deuxième chambre, où l'échange des substances à étudier se fait plus ou moins vite, le solvant contenu dans la deuxième chambre (3), la solution de référence ou la solution d'étalonnage est échangé(e) contre une solution de mesure et la pression dans la cellule osmotique est mesurée avec le système de mesure de la pression (7,8) dans la première chambre, caractérisé en ce qu'on fait varier la pression dans la première chambre (21) de façon à compenser la force d'entraînement du flux volumique à travers la membrane et en ce que l'évolution de la pression, mesurée avec le système de mesure de la pression (7, 8) et qui représente une mesure des concentrations des substances pénétrantes et non pénétrantes, ou dont la valeur est proportionnelle aux flux des substances pénétrantes de la solution de mesure entre la cellule osmotique (20) et la deuxième chambre (3), est visualisée avec un dispositif d'affichage (15) ou est exploitée dans un système pour l'interprétation des résultats (9).

4. Procédé selon la revendication 3, caractérisé par les étapes de procédé suivantes:

a) Dans la cellule osmotique (20) on établit, à la pression atmosphérique ou à une pression de travail obtenue artificiellement, une pression de travail en y faisant entrer la solution osmométrique ou le solvant pur soit par introduction directe soit par introduction dans la deuxième chambre (3).

b) On échange la solution qui se trouve dans la deuxième chambre (3) contre la solution de mesure.

c) On fait varier la pression dans la première chambre (21) de façon à compenser exactement la force d'entraînement du flux volumique à travers la membrane, de sorte que l'on obtient dP/dt = 0.

d) On mesure de façon continue la pression de compensation établie dans la première chambre, le niveau de pression compensatrice maximal atteint dans la première chambre (21) étant proportionnel à la concentration des substances pénétrantes et non pénétrantes dans la solution de mesure, et chutant, en fonction de la concentration des substances pénétrantes, de façon exponentielle avec un tracé de courbes différentiel jusqu'au niveau de pression initial ou au niveau de pression constant proportionnel à la concentration des substances non pénétrantes.

5. Procédé selon l'une des revendications précédentes, caractérisé en ce que la pression de travail dans la cellule osmotique est ajustée au niveau d'une sous-pression ou d'une pression négative par rapport à la pression de la deuxième chambre avant l'introduction de la solution de mesure.

6. Procédé selon l'une des revendications 1 à 4, caractérisé en ce que, pour la détermination des concentrations des différentes substances pénétrantes, les fonctions exponentielles correspondantes du tracé différentiel des courbes sont, après numérisation, calculées dans un ordinateur et comparées, pour l'analyse des substances, à des valeurs stockées en mémoire de tracés de courbes de substances connues.

7. Procédé selon l'une des revendications 1 à 5, caractérisé en ce que, pendant la mesure, le système à deux chambres de l'osmomètre, la solution osmométrique ainsi que la solution de référence, la solution d'étalonnage et la solution de mesure sont amenés et maintenus à un certain niveau de température.

8. Procédé selon l'une des revendications précédentes, caractérisé en ce qu'on utilise comme solution osmométrique un solvant pur ou un solvant qui contient des substances qui sont contenues dans la solution de référence pour la solution de mesure à étudier.

9. Dispositif pour la détermination de la concentration d'une substance dissoute dans un solvant pour la mise en oeuvre du procédé selon l'une des revendications 1, 2 ou 5 à 8 avec une première chambre (2) dans laquelle sont disposés une cellule osmotique (17, 18) et un système de mesure de la pression (7, 8), avec une vanne d'admission ou de sortie pour la conduite d'amenée ou de sortie de la solution osmométrique, et une deuxième chambre (3) avec des vannes d'admission et de sortie (10) pour la conduite d'amenée et de sortie d'une solution de référence, d'étalonnage ou de mesure et/ou d'une solution osmométrique ou d'un solvant pur, et avec une membrane intercalée entre ces chambres, caractérisé par une cellule osmotique rigide (17, 18) avec une membrane (4, 6) qui est doublée par une grille support (5, 5A, 5B) et/ou est appuyée fortement sur la cellule osmotique (17, 18) au moyen d'une sous-pression ou d'une pression négative dans celle-ci, un dispositif de vannes (10) dans les conduites d'amenée et de sortie (12) de la chambre de mesure (3), par lesquelles on peut introduire ou retirer la solution de mesure avant le processus de mesure pour faire varier la pression dans la chambre de mesure (3), ou un dispositif de réglage pour faire varier la pression par modification du volume de la deuxième chambre (3), et un système de mesure de la pression (13, 14) pour déterminer la pression instantanée dans la chambre de mesure (3) et pour déterminer l'évolution de la pression pendant le temps d'échange des substances à étudier.

10. Dispositif selon la revendication 9, caractérisé en ce qu'on prévoit un système de commande (9) pour la commande des vannes et de la pompe (11) pour augmenter la pression dans la chambre de mesure (3) ou pour le dispositif de réglage et en ce qu'on prévoit un dispositif de saisie des valeurs de mesure (7, 8, 9) qui détermine la chute de pression dans la cellule osmotique (17, 18) quand un flux volumique en sort, et établit une grandeur de réglage proportionnelle qui commande, soit le dispositif de commande des vannes (10) dans les conduites d'amenée et de sortie de la cellule de mesure, soit un dispositif d'augmentation de la pression, la pompe (11) dans la conduite d'amenée (12), soit le dispositif de réglage du volume, de façon à compenser la force du flux volumique, la pression de travail dans la deuxième chambre (3) restant elle aussi constante au moment d'un maximum au moins pendant un délai court avec les vannes (10) fermées dans les conduites d'amenée et de sortie de la chambre de mesure (3).

11. Dispositif pour la détermination de la concentration d'une substance dissoute dans un solvant pour la mise en oeuvre du procédé selon l'une des revendications 3 à 8 avec une première chambre (21) dans laquelle sont disposés une cellule osmotique (20) et le capteur (8) d'un système de mesure de la pression (7), avec une entrée et une sortie pour la conduite d'amenée ou de sortie de la solution osmométrique, et avec une deuxième chambre (3) avec des conduites d'amenée et de sortie pour une solution de référence, d'étalonnage ou de mesure et/ou pour la solution osmométrique ou un solvant pur, et avec une membrane intercalée entre ces chambres, caractérisé par une cellule osmotique (20) à parois minces et présentant un rapport du volume à la surface effective d'au plus 0,2 mm, avec une membrane (4) qui est appliquée sur la cellule osmotique (20), un dispositif de saisie des valeurs mesurées de la pression (9, 7, 8) pour la détermination de la pression instantanée dans la première chambre (21) et pour la détermination de l'évolution de la pression pendant le temps d'échange des substances à étudier, et un dispositif de réglage (38, 37, 39) pour faire varier la pression par modification du volume de la première chambre (21) en fonction de l'évolution de la pression déterminée, avec un piston mobile (36) qui est actionné par des agents de pression ou qui est couplé mécaniquement avec un moteur ou avec un dispositif de déplacement actionnable manuellement.

12. Dispositif selon la revendication 11, caractérisé en ce que le piston de pression (36) est disposé sous forme d'une barre de réglage dans un cylindre (34) ou dans un canal qui débouche dans la première chambre (21) et en ce que la barre de réglage est déplacée dans certaines limites par un entraînement (38) en fonction de la valeur effective saisie de la pression mesurée par l'intermédiaire d'un circuit de réglage (39) qui commande l'entraînement (38) jusqu'à ce que la condition dP/dt = 0 pour la variation de la pression de l'osmomètre (P) en fonction du temps soit remplie.

13. Dispositif selon la revendication 12, caractérisé en ce qu'on prévoit un montage de réglage électronique (39) qui commande un moteur électrique ou un dispositif de commande hydraulique dont le mouvement est transmis à la barre de réglage (36).

14. Dispositif selon l'une des revendications 9 à 13, caractérisé en ce que la cellule osmotique (20) est composée d'un corps poreux incompressible, imprégné de solution, constitué de verre fritté, de céramique, de matière plastique ou d'un film de solution doublé sur les deux côtés d'une grille support et en ce que la membrane est une membrane d'hyperfiltration ou une membrane de fibres creuses.

15. Dispositif selon l'une des revendications 9 à 14, caractérisé en ce que le système de mesure de la pression (7, 8, 13, 14) dans la deuxième chambre (3) et/ou dans la première chambre (21) est un transformateur de pression électrique avec un dispositif qui transforme la pression hydrostatique mesurée en une valeur de mesure électrique analogique ou numérique exploitable et en ce que le système de mesure est relié aux entrées d'un ordinateur (9), et en ce que l'ordinateur détermine d'après un programme enregistré les grandeurs de réglage pour le régleur de pression, pour compenser la force dépendant de la concentration lors de l'échange du solvant ou des substances pénétrantes de la solution osmométrique, et mémorise et exploite les valeurs mesurées de l'évolution de la pression dans la deuxième chambre (3) et/ou de la première chambre (21), cette évolution étant représentée sous forme de courbes au moyen de dispositifs d'affichage (15) raccordés ou pouvant être imprimée au moyen d'une imprimante (16).

16. Dispositif selon l'une des revendications 9 à 15, caractérisé en ce que la cellule osmotique (17, 18) présente une épaisseur de couche de $\leq$ 0,2 mm à 0,3 mm.

Fig.1

Fig. 2

Fig. 3

Fig. 4

Fig. 5

Fig. 6

Fig. 7 A

Fig. 7

Fig. 8 A

Fig. 8 B

Fig. 8 C

Eichlösung

H2O

Testlösung

Osmometerlösung

Fig. 9

Fig. 10

Fig. 11